(19) Europäisches Patentamt
European Patent Office
Office européen des brevets

(11) **EP 1 632 662 B1**

(12) **EUROPÄISCHE PATENTSCHRIFT**

(45) Veröffentlichungstag und Bekanntmachung des Hinweises auf die Patenterteilung:
**09.10.2013 Patentblatt 2013/41**

(21) Anmeldenummer: **05018097.5**

(22) Anmeldetag: **19.08.2005**

(51) Int Cl.:
*F01D 5/14* *(2006.01)*  *F02C 9/18* *(2006.01)*
*F01D 17/10* *(2006.01)*  *F04D 27/02* *(2006.01)*

(54) **Strömungsarbeitsmaschine mit Fluidentnahme**

Turbomachine with bleeding

Turbomachine avec soutirage

(84) Benannte Vertragsstaaten:
**DE FR GB**

(30) Priorität: **06.09.2004 DE 102004043036**

(43) Veröffentlichungstag der Anmeldung:
**08.03.2006 Patentblatt 2006/10**

(73) Patentinhaber: **Rolls-Royce Deutschland Ltd & Co KG**
**15827 Dahlewitz (DE)**

(72) Erfinder: **Gümmer, Volker**
**15831 Mahlow (DE)**

(74) Vertreter: **Görz, Ingo**
**Hoefer & Partner**
**Patentanwälte**
**Pilgersheimer Strasse 20**
**81543 München (DE)**

(56) Entgegenhaltungen:
EP-A- 0 049 655       EP-A- 1 329 615
GB-A- 2 388 875       US-A- 3 846 038
US-A- 5 020 970       US-A- 5 209 633
US-A1- 2003 033 815

**Beschreibung**

Die Erfindung bezieht sich auf eine Strömungsarbeitsmaschine mit Fluidentnahme gemäß dem Oberbegriff des Hauptanspruchs.

Die vorliegende Erfindung bezieht sich auf Strömungsarbeitsmaschinen wie etwa Bläser, Verdichter, Pumpen und Ventilatoren, sowohl in axialer, halbaxialer als auch in radialer Bauart. Das Arbeitsmedium oder Fluid kann gasförmig oder flüssig sein.

Im Einzelnen betrifft die Erfindung eine Strömungsarbeitsmaschine mit zumindest einem Rotor, sie kann aber auch eine oder mehrere Stufen mit jeweils einem Rotor und einem Stator umfassen. Es existiert ein Gehäuse, welches die Durchströmung der gegebenen Rotoren und der Statoren mit einem Fluid nach außen begrenzt. Der Rotor besteht aus einer Anzahl von Schaufeln, die mit einer rotierenden Welle verbunden sind und Energie an das Arbeitsmedium abgeben. Der Rotor ist mit freiem Schaufelende oder mit Deckband am Gehäuse ausgeführt. Der Stator besteht aus einer Anzahl feststehender Schaufeln, die gehäuseseitig und/oder nabenseitig mit festem Schaufelende ausgeführt sind. Die Strömungsarbeitsmaschine kann ein- oder mehrwellig ausgeführt sein.

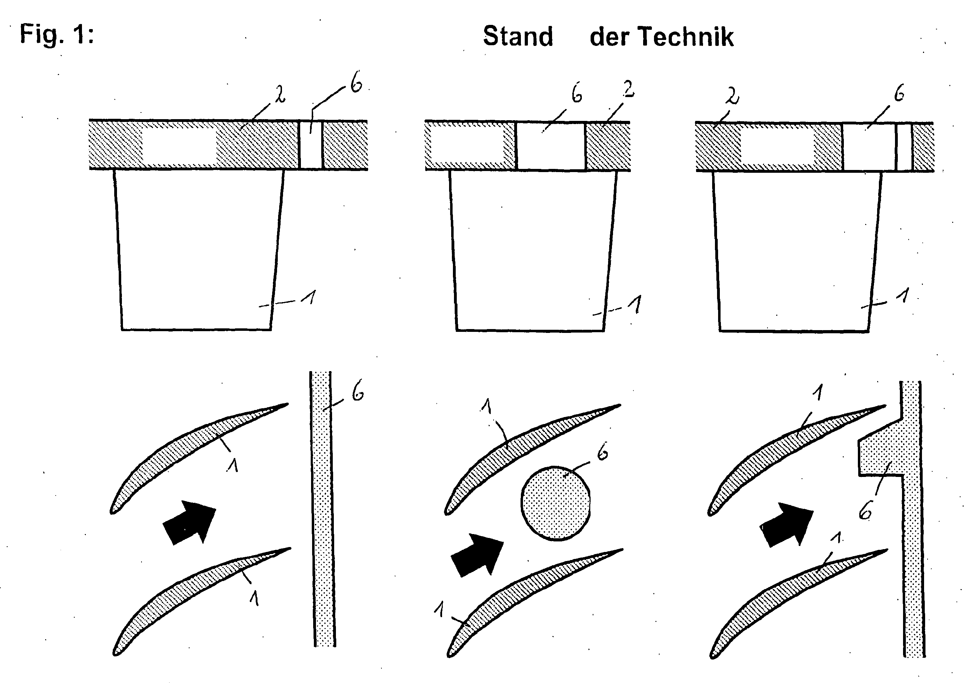

Eine weit verbreitete Anforderung an Strömungsarbeitsmaschinen, beispielsweise Bläsern, Verdichtern, Pumpen und Ventilatoren, besteht in der Bereitstellung von Sekundärfluidmengen an den Wandungen des Hauptströmungspfades. Wie die Fig. 1 zeigt, werden für die Entnahme der erforderlichen Fluidmengen üblicherweise Schlitze an der Naben- oder Gehäusewand vorgesehen, die in unbeschaufelten Bereichen zwischen zwei Schaufelreihen der Maschine angeordnet sind und sich über Teile oder die Gesamtheit des Umfangs erstrecken. In manchen Fällen reicht die Fluidnahmevorrichtung über Teile des Umfangs stromauf in eine Schaufelreihe hinein. Ebenfalls zum Stand der Technik gehören Entnahmevorrichtungen innerhalb der Schaufelpassage, die kreisförmig, oval oder anders geometrisch einfach gestaltet sind und sich aufgrund ihrer Form und ihrer Lage in der Passage sehr nachteilig auf die Strömung in der betreffenden Schaufelreihe sowie den Wirkungsgrad der gesamten Strömungsarbeitmaschine auswirken.

In Fig. 1 ist die schematisch gezeigte Schaufel mit dem Bezugszeichen 1 versehen, wobei die oberen Varianten der Fig. 1 jeweils Seitenansichten in Radialschnitten darstellen, während die unteren Darstellungen jeweils Schnittansichten in Umfangsrichtung sind. Die Wand des Gehäuses ist mit 2 bezeichnet. Das Bezugszeichen 6 bezeichnet eine Fluidentnahmeöffnung.

Der in Fig. 1 beschriebene Stand der Technik ergibt sich beispielsweise aus der EP-A-0 049 655.

Als nachteilig erweist sich beim Stand der Technik, dass zur Realisierung zusätzliche Baulänge aufgewendet werden muss und/oder Einbußen bezüglich des Wirkungsgrades der Strömungsarbeitmaschine hinzunehmen sind. Im Falle eines Flugtriebwerks führen übliche Fluidentnahmevorrichtungen, die innerhalb des Verdichters angeordnet sind, zu Nachteilen bezüglich der Baulänge, des Baugewichts und des Kraftstoffverbrauchs.

Der Stand der Technik sieht bislang keine wirkungsvolle Kombination der Sekundärfluidbereitstellung und einer günstigen Strömungsbeeinflussung in der Strömungsarbeitsmaschine vor.

Aus der GB-A-2 388 875 ist eine Strömungsarbeitsmaschine bekannt, bei welcher zwischen den einzelnen Statorschaufeln Ausnehmungen zur Fluidentnahme vorgesehen sind, welche nahe an der Druckseite der Schaufel, jedoch weiter entfernt von der Saugseite der Schaufel, angeordnet sind. Über die Bemessung der Ausnehmungen sagt Dokument D1 nichts aus.

Die US 2003/033815 A1 zeigt Fluidentnahmeausnehmungen zwischen Statorschaufeln, welche sich im Wesentlichen in Umfangrichtung erstrecken. Die Ausnehmungen sind nicht nahe der Saugseite angeordnet, sie orientieren sich somit nicht an der Schaufelsaugseite.

Die US-A-3 846 038 zeigt Ausnehmungen zwischen den Statorschaufeln, welche sich in einem Winkel zur Umfangsrichtung schlitzartig von der Anströmkante der Schaufel zu einem mittleren Bereich der nächstfolgenden Schaufel erstrecken. Die Ausnehmungen sind insbesondere nicht entlang oder nahe der Saugseite der Schaufel angeordnet.

Aus der EP-A-0 049 655 ist eine Ausgestaltung einer Fluidentnahmeöffnung gezeigt, welche mittig zwischen benachbarten Schaufeln angeordnet und im Wesentlichen kreisrund ausgebildet ist, so wie dies in der Beschreibung des Standes der Technik gemäß Fig. 1 dargestellt ist. Eine ähnliche Ausgestaltung zeigt auch die EP-A-1 329 615.

Der vorliegenden Erfindung liegt die Aufgabe zugrunde, an mindestens einer Schaufelreihe einer Strömungsarbeitsmaschine eine Vorrichtung zur Fluidabführung zu schaffen, welche unter Vermeidung des Standes der Technik eine Sekundärfluidbereitstellung und gleichzeitig eine Wirkungsgradsteigerung durch günstige Strömungsbeeinflussung erreicht.

Erfindungsgemäß wird die Aufgabe durch die Merkmalskombination des Hauptanspruchs gelöst, die Unteransprüche zeigen weitere vorteilhafte Ausgestaltungen der Erfindung.

Als nachteilig erweist sich beim Stand der Technik, dass zur Realisierung zusätzliche Baulänge aufgewendet werden muss und/oder Einbußen bezüglich des Wirkungsgrades der Strömungsarbeitmaschine hinzunehmen sind. Im Falle eines Flugtriebwerks führen übliche Fluidentnahmevorrichtungen, die innerhalb des Verdichters angeordnet sind, zu Nachteilen bezüglich der Baulänge, des Baugewichts und des Kraftstoffverbrauchs.

Der Stand der Technik sieht bislang keine wirkungsvolle Kombination der Sekundärfluidbereitstellung und einer günstigen Strömungsbeeinflussung in der Strömungsarbeitsmaschine vor.

Der vorliegenden Erfindung liegt die Aufgabe zugrunde, an mindestens einer Schaufelreihe einer Strömungsarbeitsmaschine eine Vorrichtung zur Fluidabführung zu schaffen, welche unter Vermeidung des Standes der Technik eine Sekundärfluidbereitstellung und gleichzeitig eine Wirkungsgradsteigerung durch günstige Strömungsbeeinflussung erreicht.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist an der inneren oder der äußeren Wandung der Strömungsarbeitsmaschine innerhalb mindestens einer Schaufelpassage einer Rotor- oder Statorschaufelreihe eine Fluidentnahmevorrichtung vorgesehen, deren Öffnung nahe an der Schaufelsaugseite positioniert ist, im Wesentlichen entlang der Schaufelsaugseite orientiert ist und in Profilsehnenrichtung betrachtet, eine längliche Form sowie variierende Breite besitzt.

Im Folgenden wird die Erfindung anhand von Ausführungsbeispielen in Verbindung mit den Figuren beschrieben. Dabei zeigt:

Fig. 1 eine schematische Darstellung des Standes der Technik;

Fig. 2 eine schematische Darstellung des erfindungsgemäßen Grundkonzeptes;

Fig. 3 eine Definition der Fluidentnahmeöffnung;

Fig. 4a erfindungsgemäße Lösungen;

Fig. 4b erfindungsgemäße Lösungen;

Fig. 4c erfindungsgemäße Lösungen, Schnitt F-F in Fig. 4a,b;

Fig. 4d erfindungsgemäße Lösungen, Schnitt G-G in Fig. 4a,b;

Fig. 5a erfindungsgemäße Lösungen für eine Schaufelreihe mit Einzelplattformen, ohne Kantenschräge/-rundung an der Fluidentnahmeöffnung;

Fig. 5b erfindungsgemäße Lösungen für eine Schaufelreihe mit Einzelplattformen, mit Kantenschräge/-rundung an der Fluidentnahmeöffnung;

Fig. 5c erfindungsgemäße Lösungen für eine Schaufelreihe mit Einzelplattformen und Versatz an den Plattformseitenkanten.

Die Fig. 1 zeigt in stark vereinfachter Darstellung Konfigurationen von Fluidentnahmevorrichtungen nach dem Stand der Technik: ein Ringschlitz hinter der Schaufelreihe, einfache Bohrungen runder oder ovaler Form ohne spezielle Platzierung, ein Ringschlitz hinter Schaufelreihe mit Ausläufern in die Passage.

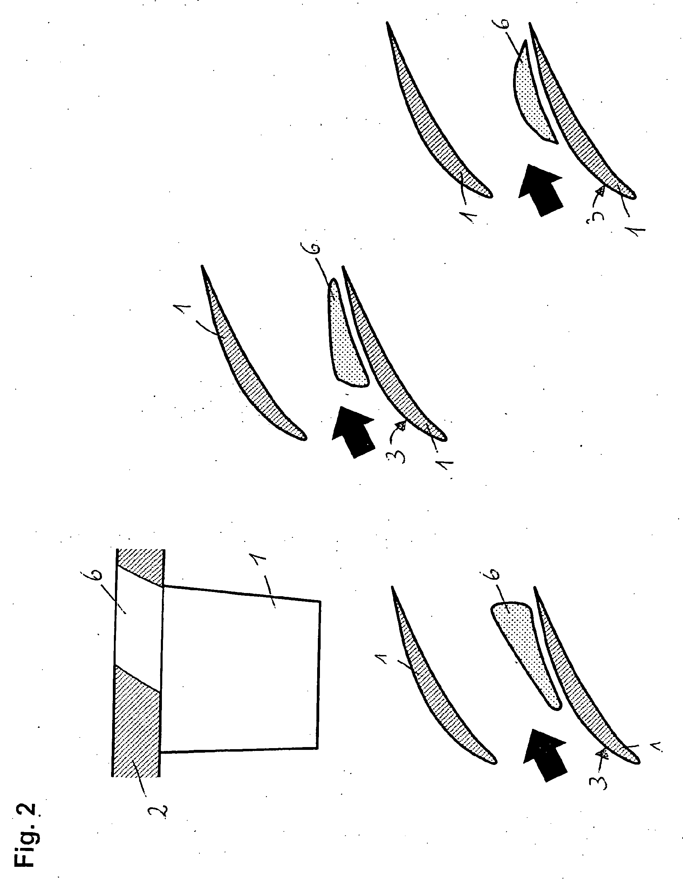

Die Fig. 2 zeigt in stark vereinfachter Darstellung die erfindungsgemäße Lösung an einer Konfiguration aus Wand und Schaufelreihe. Hierbei kann es sich um eine beliebige Paarung von Rotor- oder Statorschaufelreihe mit einer Naben- oder Gehäusewand der Strömungsarbeitsmaschine handeln. In mindestens einer der durch Vorder- und Hinterkantenebene begrenzten Passage zwischen zwei Schaufeln befindet sich die erfindungsgemäße Fluidentnahmevorrichtung. Die Schaufelreihe wird, wie durch den Pfeil angedeutet, von links durchströmt. Die Öffnung der Fluidentnahmevorrichtung befindet sich in der Nähe der Schaufelsaugseite und ist in Profilsehnenrichtung länglich gestaltet.

In Fig. 2 sowie den nachfolgenden Figuren ist die Fluidentnahmeöffnung jeweils mit dem Bezugszeichen 6 bezeichnet. Sie wird nachfolgend auch als FEÖ bezeichnet.

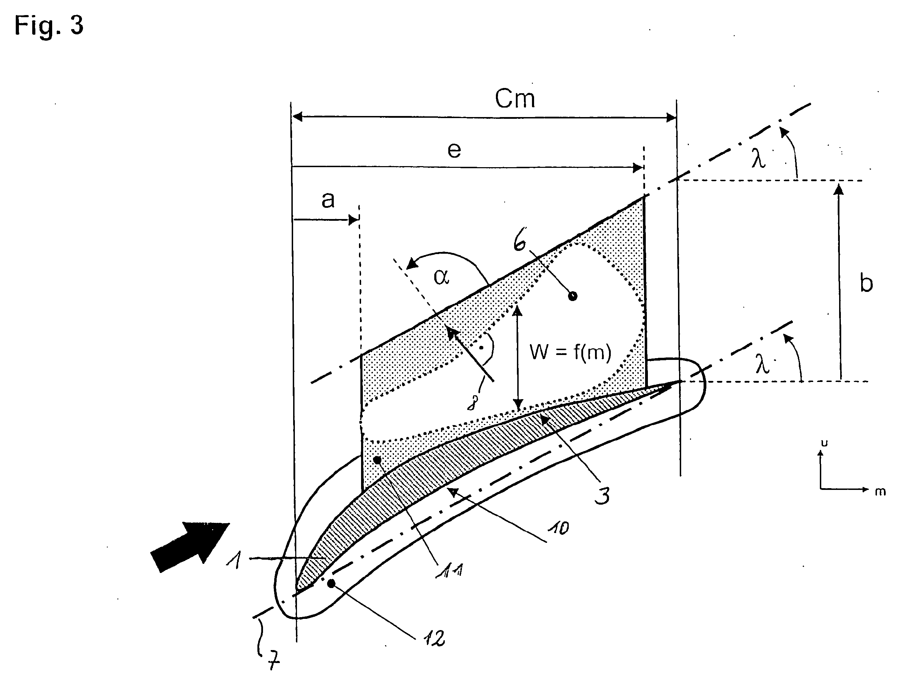

In Fig. 3 sind die Gestaltungsgrenzen der Fluidentnahmeöffnung 6 (FEÖ) definiert. Betrachtet wird hier der Wandschnitt einer Schaufel in einer durch die Meridianrichtung m und die Umfangsrichtung u aufgespannten Ebene. Der Schaufelschnitt besitzt die meridionale Länge Cm. Die Strömungsrichtung ist durch einen Pfeil angedeutet. In der m-u-Ebene ist durch drei begrenzende Linien ein Positionsfeld für die Fluidentnahmeöffnung 6 (FEÖ) gegeben. An der zuströmungszugewandten Seite wird die Grenze durch eine in Umfangsrichtung verlaufende Linie mit dem in Meridianrichtung m gemessenen Abstand a von der Profilvorderkante gegeben. An der zuströmungsabgewandten Seite wird eine in Umfangsrichtung orientierte Linie mit dem in Meridianrichtung m gemessenen Abstand e von der Profilvorderkante herangezogen. Als Begrenzung an der oberen, dem nächsten Schaufelprofil zugewandten Seite der FEÖ wird eine Grenzlinie verwendet, die in einem in Umfangsrichtung u gemessenen Abstand b parallel zu der an die Druckseite angelegten Profilsehne verläuft. Die Profilsehne des Schaufelwandschnittes verläuft unter einem Winkel λ gegen die Meridianrichtung m. Erfindungsgemäß ist die Größe der Abstände a, e, und b wie folgt festgelegt (siehe Fig. 3):

$$0,2 \; Cm < a < 0,9 \; Cm$$

$$0,5 \; Cm < e < Cm$$

$$b < 0,7 \; (e-a) \; / \; (\cos \lambda)^2$$

Die in Umfangsrichtung gemessene Weite W der Fluidentnahmeöffnung 6 (FEÖ) variiert abweichend von einem konstanten Verlauf als Funktion der Meridiankoordinate: $W = f(m)$.

Schließlich ist es besonders vorteilhaft, die der Strömung zugewandten Ränder der Fluidentnahmeöffnung 6 (FEÖ) mit einer Schräge 4 oder einer Rundung 5 zu versehen. Erfindungsgemäß werden gegebenenfalls jene Ränder der Fluidentnahmeöffnung 6 (FEÖ) mit einer Schräge 4 oder Rundung 5 versehen, deren Randnormale 8 mit der Profilsehne 7 des Wandschaufelschnittes einen Winkel $\alpha$ zwischen 70° und 250° einschließt ($70° < \alpha < 250°$). Als Schräge/Rundung sind erfindungsgemäß auch Kantenphasen sowie längere stromauf reichende Einströmrampen zu verstehen.

Weiterhin zeigt die Fig. 3 mit dem Bezugszeichen 10 die Druckseite der Schaufel 1. Das Bezugszeichen 11 bezeichnet das Positionsfeld der Fluidentnahmeöffnung 6. Das Bezugszeichen 12 bezeichnet den Rundungsradius der Schaufel 1.

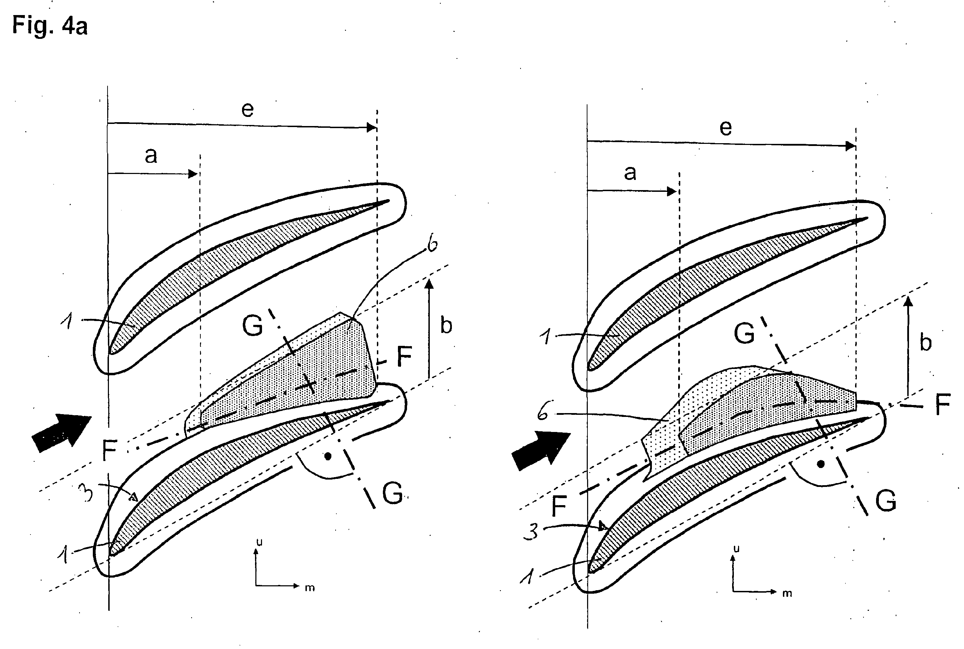

Die Fig. 4a zeigt zwei günstige, im Rahmen der Erfindung mögliche Varianten der Fluidentnahmevorrichtung mit dem kenntlich gemachten Fluidentnahmeöffnungs (FEÖ) -Positionsfeld 6 sowie den Größen a, e und b. Kennzeichnend für diese Lösungen ist die enge Orientierung an der Schaufelsaugseite und ein über wenigstens Teile der Fluidentnahmeöffnung 6 (FEÖ) vorgesehenen Anstieg der Weite W in Schaufelprofilsehnenrichtung.

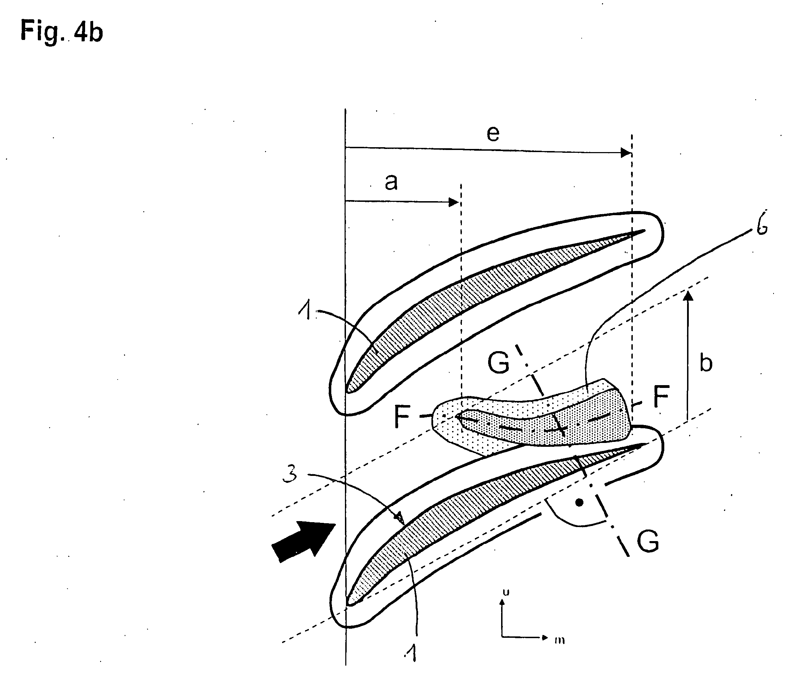

Wie in Fig. 4b gezeigt, kann es erfindungsgemäß besonders vorteilhaft sein, den Abstand der Fluidentnahmeöffnung 6 (FEÖ) zur Schaufelsaugseite, gegen die Anströmungsrichtung betrachtet, ansteigen zu lassen und die Fluidentnahmeöffnung 6 (FEÖ) auf diese Weise mit einem merklich zur Saugseite hin konvex gekrümmten Verlauf zu versehen.

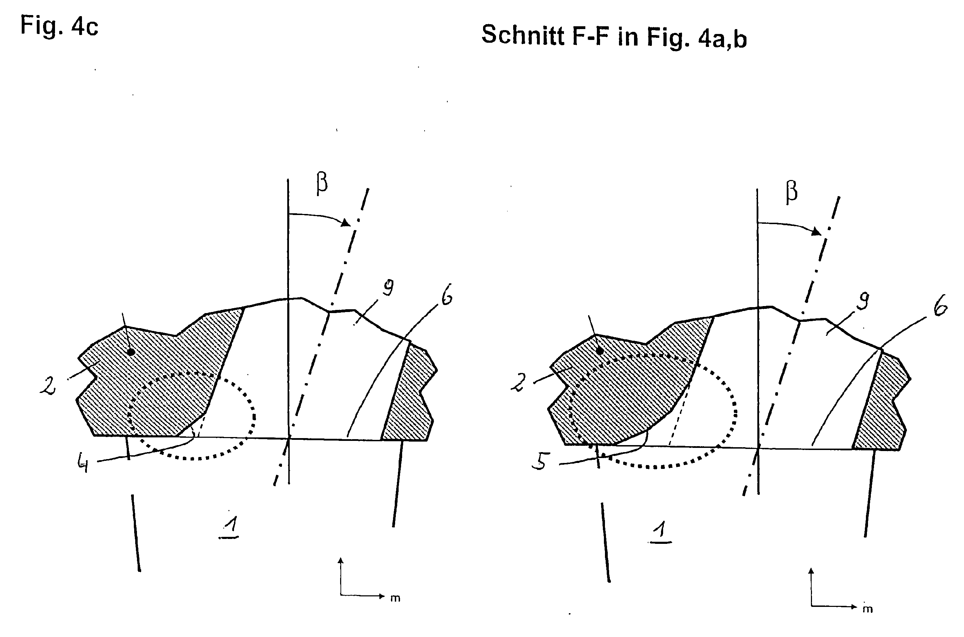

Die Fig. 4c zeigte den in Fig. 4a,b eingezeichneten Schnitt F-F. Dargestellt sind Beispiele für eine im Rahmen der Erfindung mögliche Kantenschräge und Kantenrundung an der Fluidentnahmeöffnung 6 (FEÖ). An die Fluidentnahmeöffnung 6 (FEÖ) schließt sich ein Entnahmekanal an, der in der Schnittebene zur einfachen Visualisierung geradlinig dargestellt ist, aber erfindungsgemäß auch frei gekrümmte Wandungen besitzen kann.

Die Mittellinie des sich an die Öffnung der Fluidentnahmeöffnung 6 (FEÖ) anschließende Entnahmekanals 9 ist in Umgebung der Fluidentnahmeöffnung 6 (FEÖ) um den Winkel $\beta$ gegen die Senkrechte zur Meridianrichtung m geneigt ($15° < \beta < 75°$).

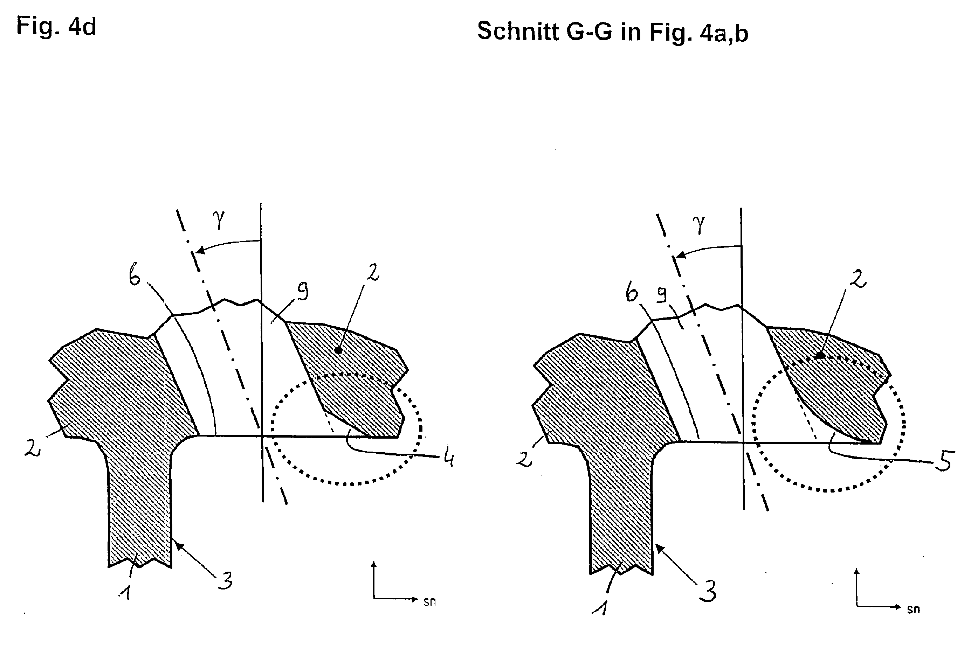

Die Fig. 4d zeigt den in Fig. 4a,b eingezeichneten Schnitt G-G. Dargestellt sind auch hier Beispiele für eine im Rahmen der Erfindung mögliche Kantenschräge und Kantenrundung and der FEÖ. An die Fluidentnahmeöffnung 6 (FEÖ) schließt sich der Entnahmekanal an, der auch in dieser Schnittebene zur einfachen Visualisierung geradlinig dargestellt ist, aber erfindungsgemäß frei gekrümmte Wandungen besitzen kann. Die Mittellinie des sich an die Öffnung der Fluidentnahmeöffnung 6 (FEÖ) anschließende Entnahmekanals 9 ist in Umgebung der Fluidentnahmeöffnung 6 (FEÖ) um den Winkel $\gamma$ gegen die Senkrechte zur Sehnennormalenrichtung sn geneigt ($15° < \gamma < 75°$).

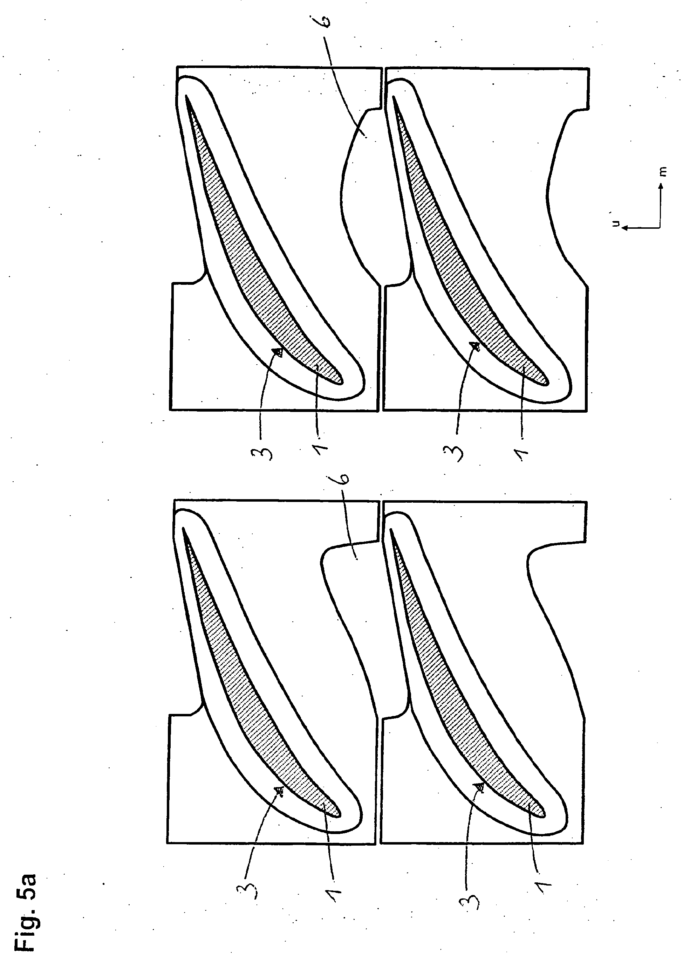

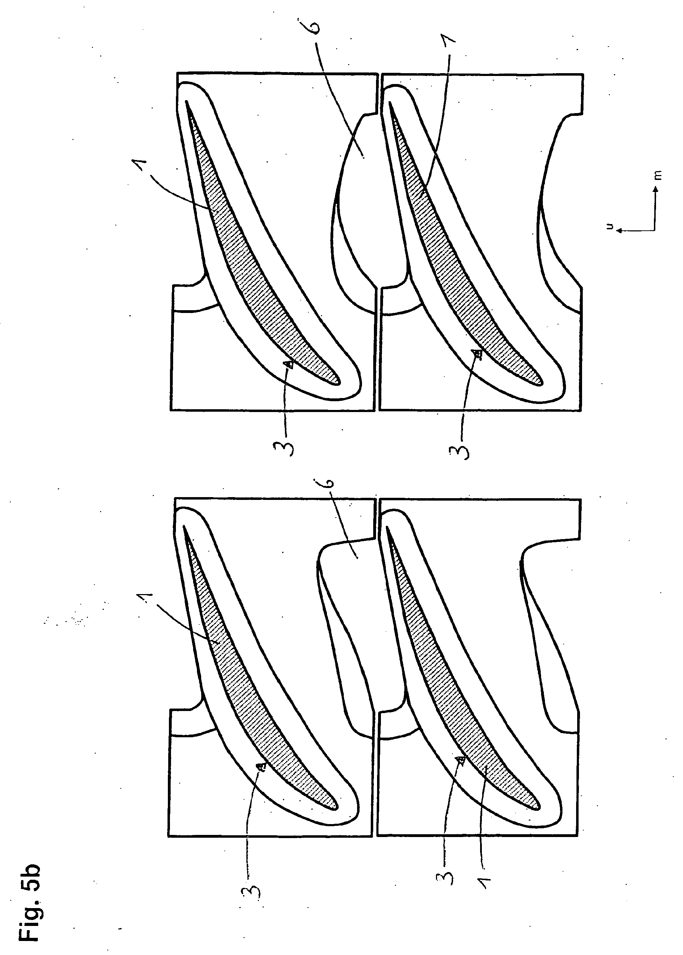

Erfindungsgemäß ist es vorteilhaft, bei Konstruktionen mit Schaufeleinzelplattformen die Fluidentnahmeöffnung 6 (FEÖ) mit Hilfe der Seitenflanken zweier benachbarter Plattformen zu bilden. Die Fig. 5a zeigt dies für zwei erfindungsgemäße Formen der Fluidentnahmeöffnung 6 (FEÖ) ohne Randschräge/-rundung und fluchtende Teilabschnitte der betroffenen Seitenflanken. Die Fig. 5b zeigt Lösungen mit Fluidentnahmeöffnung 6 (FEÖ) Randschräge/-rundung.

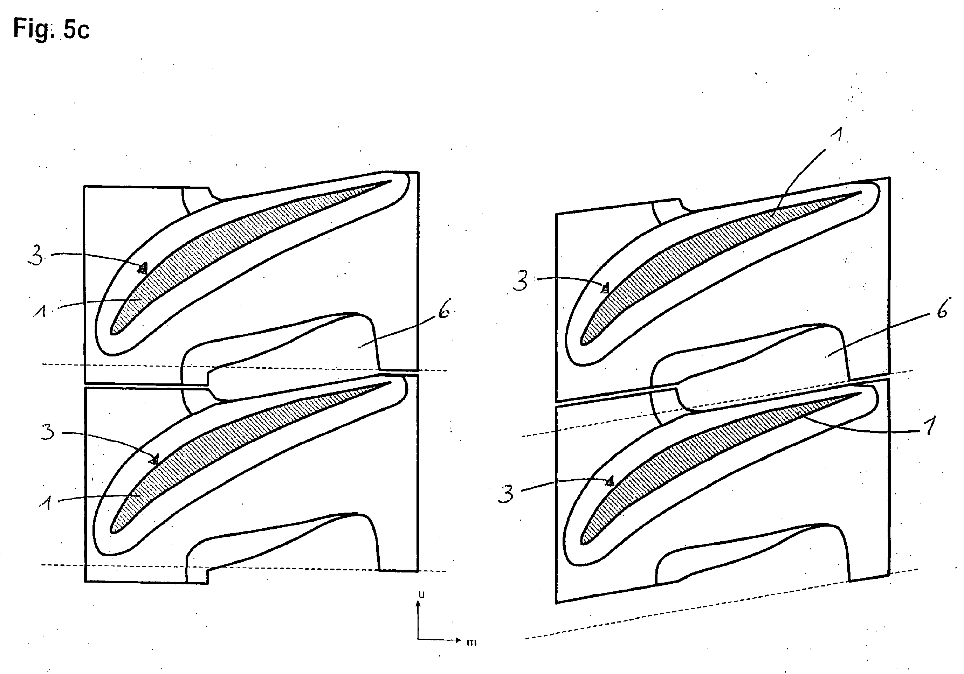

Weiterhin ist es erfindungsgemäß besonders vorteilhaft, bei Konstruktionen mit Schaufeleinzelplattformen die Fluidentnahmeöffnung 6 (FEÖ) mit Hilfe der Seitenflanken zweier benachbarter Plattformen zu bilden, deren Teilabschnitte der betroffenen Seitenflanken nicht fluchten, sondern parallel gegeneinander versetzt ausgeführt sind. Die Fig. 5c zeigt erfindungsgemäße Lösungen für eine Fluidentnahmeöffnung 6 (FEÖ) mit Randschräge/-rundung, in der linken Bildhälfte für eine rechtwinklige Plattformkantenanordnung, in der rechten Bildhälfte für eine schräge Plattformkantenanordnung.

Im Einzelnen zeigt die Fig. 5a erfindungsgemäße Lösungen für eine Schaufelreihe mit Einzelplattformen ohne Kantenschräge bzw. Kantenrundung an der Fluidentnahmeöffnung 6. Die Fig. 5b zeigt erfindungsgemäße Lösungsvarianten für eine Schaufelreihe mit Einzelplattformen mit Kantenschräge oder Kantenrundung an der Fluidentnahmeöffnung 6. Die Fig. 5c zeigt erfindungsgemäße Lösungsvarianten für eine Schaufelreihe mit Einzelplattformen und Versatz an den Plattformseitenkanten.

Im Rahmen der Erfindung ergeben sich somit insbesondere folgende Vorteile:

Bei der erfindungsgemäßen Fluidentnahmeöffnung wird eine Sekundärfluidbereitstellung in Strömungsarbeitsmaschinen ermöglicht, die gleichzeitig eine positive Beeinflussung der Schaufelumströmung innerhalb des Hauptströmungspfades erlaubt. Dies ist bei unterschiedlichsten Arten von Strömungsarbeitsmaschinen wie Bläsern, Verdichtern, Pumpen und Ventilatoren möglich. Am Beispiel eines 6-stufigen Triebwerkverdichters gemessen ist pro betroffener Schaufelreihe eine Verbesserung des Verdichtergesamtwirkungsgrades von 0,2% bis 0,30% zu beziffern.

<u>Bezugszeichenliste</u>

1     Schaufel
2     Gehäuse (Wand)
3     Saugseite
4     Randschräge
5     Öffnung
6     Fluidentnahmeöffnung

## Patentansprüche

1. Strömungsarbeitsmaschine mit Fluidentnahme, mit zumindest einem Stator oder mindestens einem Rotor, wobei der Stator mit feststehenden Schaufeln (1) versehen ist und der Rotor mehrere an einer rotierenden Welle befestigte Rotorschaufeln umfasst, wobei ein Gehäuse (2) die Durchströmung des Rotors oder des Stators mit einem Fluid nach außen begrenzt, **dadurch gekennzeichnet, dass** an einer inneren oder einer äußeren Wandung der Strömungsarbeitsmaschine innerhalb mindestens einer Schaufelpassage einer Rotor- oder Statorschaufelreihe eine Fluidentnahmeöffnung (6) vorgesehen ist, welche nahe an der Schaufelsaugseite positioniert ist, im Wesentlichen entlang der Schaufelsaugseite orientiert ist und in Profilsehnenrichtung betrachtet, eine längliche Form sowie eine variierende Breite besitzt,
wobei in einer die Meridianrichtung (m) und die Umfangsrichtung (u) umfassenden Ebene die Gestaltungsgrenzen der Fluidentnahmeöffnung (6) an der zuströmungszugewandten Seite durch eine in Umfangsrichtung verlaufende Linie mit dem in Meridianrichtung (m) gemessenen Abstand (a) von der Profilvorderkante der Schaufel (1) und an der zuströmungsabgewandten Seite durch eine in Umfangsrichtung orientierte Linie mit dem in Meridianrichtung (m) gemessenen Abstand (e) von der Profilvorderkante der Schaufel (1) und an der dem nächsten Schaufelprofil zugewandten Seite durch eine Grenzlinie, die in einem in Umfangsrichtung (u) gemessenen Abstand (b) parallel zu der an die Druckseite angelegten Profilsehne (7) verläuft, begrenzt werden,
wobei die Profilsehne des Schaufelschnitts unter einem Winkel ($\lambda$) gegen die Meridianrichtung (m) verläuft, wobei die Größe der Abstände a, e und b wie folgt festgelegt ist:

$$0{,}2\ Cm < a < 0{,}9\ Cm$$

$$0{,}5\ Cm < e < Cm$$

$$b < 0{,}7\ (e-a)\ /\ (\cos \lambda)^{2},$$

wobei Cm die meridionale Länge des Schaufelschnitts ist,
wobei eine in Umfangsrichtung gemessene Weite (W) der Fluidentnahmeöffnung (6) nicht konstant verläuft, sondern als Funktion der Meridiankoordinate (m) frei variiert, so dass sich folgende Gleichung ergibt:

$$W = f(m) \neq const$$

2. Strömungsarbeitsmaschine nach Anspruch 1, **dadurch gekennzeichnet, dass** Ränder der Fluidentnahmeöffnung (6) mit einer Schräge oder Rundung versehen sind, deren Randnormale (8) mit der Profilsehne (7) des Wandschaufelschnittes einen Winkel $\alpha$ zwischen 70° und 250° einschließt.

3. Strömungsarbeitsmaschine nach Anspruch 1 oder 2, **dadurch gekennzeichnet, dass** zumindest ein Rand der Fluidentnahmeöffnung (6) mit einer Randschräge (4) versehen ist.

4. Strömungsarbeitsmaschine nach Anspruch 1 oder 2, **dadurch gekennzeichnet, dass** zumindest ein Rand der Fluidentnahmeöffnung (6) mit einer Rundung (5) versehen ist.

5. Strömungsarbeitsmaschine nach einem der Ansprüche 1 bis 4, **dadurch gekennzeichnet, dass** eine Mittellinie eines sich an die Fluidentnahmeöffnung (6) anschließenden Entnahmekanals (9) in Umgebung der Fluidentnahmeöffnung (6) um einen Winkel $\beta$ gegen die Senkrechte zur Meridianrichtung m geneigt ist, sodass sich folgende Beziehung ergibt:

$$15° < \beta < 75°.$$

6. Strömungsarbeitsmaschine nach einem der Ansprüche 1 bis 5, **dadurch gekennzeichnet, dass** eine Mittellinie eines sich an die Fluidentnahmeöffnung (6) anschließenden Entnahmekanals (9) in Umgebung der Fluidentnahmeöffnung (6) um einen Winkel $\gamma$ gegen die Senkrechte zur Sehnennormalenrichtung sn geneigt ist, sodass sich folgende Beziehung ergibt:

$$15° < \gamma < 75°$$

## Claims

1. Fluid-flow machine with fluid removal, with at least one stator or at least one rotor, with the stator being provided with stationary vanes (1) and the rotor including several rotor blades attached to a rotating shaft, with a casing (2) confining the passage of fluid through the rotor or the stator in the outward direction, **characterized in that**, on an inner or an outer wall of the fluid-flow machine within at least one blade passage of a rotor blade or a stator vane row a fluid removal opening (6) is provided, which is positioned in the proximity of the blade suction side and oriented essentially along the blade suction side and - as viewed in the profile chord direction - has an elongated shape and is of varying width, with the possibilities for designing the fluid removal opening (6) being limited - in a plane including the meridional direction (m) and the circumferential direction (u) - on the side facing the inflow by a line running in the circumferential direction with the distance (a) from the profile leading edge of the blade (1) measured in the meridional direction (m) and on the side facing away from the inflow by a line oriented in the circumferential direction with the distance (e) from the profile leading edge of the blade (1) measured in the meridional direction (m) and on the side facing the nearest blade profile by a border line running parallel to the profile chord (7) positioned against the pressure side at a distance (b) measured in the circumferential direction (u), with the profile chord of the blade section extending at an angle ($\lambda$) against the meridional direction (m), with the sizes of the distances a, e and b being determined as follows:

$$0.2 \, Cm < a < 0.9 \, Cm$$

$$0.5 \, Cm < e < Cm$$

$$b < 0.7 \, (e\text{-}a) \, / \, (\cos \lambda)^2,$$

with Cm being the meridional length of the blade section, with a width (W) of the fluid removal opening (6) as measured in the circumferential direction not being constant, but varying freely as a function of the meridional coordinate (m), resulting in the following equation:

$$W = f(m) \neq const.$$

**2.** Fluid-flow machine in accordance with Claim 1, **characterized in that** the edges of the fluid removal opening (6) are provided with a chamfer or radius whose edge normal (8) includes an angle $\alpha$ between 70° and 250° with the profile chord (7) of the wall blade section.

**3.** Fluid-flow machine in accordance with Claim 1 or 2, **characterized in that** at least one edge of the fluid removal opening (6) is provided with an edge chamfer (4).

**4.** Fluid-flow machine in accordance with Claim 1 or 2, **characterized in that** at least one edge of the fluid removal opening (6) is provided with a radius (5).

**5.** Fluid-flow machine in accordance with one of the Claims 1 to 4, **characterized in that** a center line of a removal duct (9) connecting to the fluid removal opening (6) is inclined in the environment of the fluid removal opening (6) by an angle $\beta$ to the normal on the meridional direction m, resulting in the following equation:

$$15° < \beta < 75°.$$

**6.** Fluid-flow machine in accordance with one of the Claims 1 to 5, **characterized in that** a center line of a removal duct (9) connecting to the fluid removal opening (6) is inclined in the environment of the fluid removal opening (6) by an angle $\gamma$ to the normal on the chordal normal direction sn, resulting in the following equation:

$$15° < \gamma < 75°.$$

**Revendications**

**1.** Machine à écoulement avec prélèvement de fluide, comprenant au moins un stator ou au moins un rotor, sachant que le stator est muni d'aubes fixes (1) et le rotor comprend plusieurs aubes de rotor fixées à un arbre en rotation, et qu'un carter (2) limite vers l'extérieur le passage d'un fluide à travers le rotor ou le stator, **caractérisée en ce que** sur une paroi intérieure ou extérieure de la machine à écoulement, dans au moins un passage d'aube d'une rangée d'aubes de rotor ou de stator, est prévu un orifice de prélèvement de fluide (6) qui est positionné à proximité du côté aspiration des aubes, orienté pour l'essentiel le long du côté aspiration des aubes et qui, vu dans le sens de la corde du profil, possède une forme allongée et une largeur variante, sachant que dans un plan comprenant la direction méridienne (m) et la direction circonférentielle (u), les possibilités de conception de l'orifice de prélèvement de fluide (6) sont limitées du côté orienté vers l'afflux par une ligne s'étendant dans la direction circonférentielle avec la distance (a) au bord d'attaque du profil de l'aube (1) mesurée dans la direction méridienne (m), et du côté opposé à l'afflux par une ligne orientée dans la direction circonférentielle avec la distance (e) au bord d'attaque du profil de l'aube (1) mesurée dans la direction méridienne (m), et du côté orienté vers le profil d'aube le plus proche par une ligne de délimitation qui s'étend parallèlement à la corde du profil (7) côté refoulement à une distance (b) mesurée dans la direction circonférentielle (u),

sachant que la corde du profil de la section d'aube s'étend suivant un angle ($\lambda$) par rapport à la direction méridienne (m), la valeur des distances a, e et b étant définie comme suit :

$$0,2 \, Cm < a < 0,9 \, Cm$$

$$0,5 \, Cm < e < Cm$$

$$b < 0,7 \, (e\text{-}a) / (\cos \lambda)^2,$$

où Cm est la longueur méridienne de la section d'aube,

sachant qu'une largeur (W) de l'orifice de prélèvement de fluide (6) mesurée dans la direction circonférentielle n'est pas constante, mais varie librement en fonction de la coordonnée méridienne (m), si bien qu'il en résulte l'équation suivante :

$$W = f(m) \neq const.$$

2. Machine à écoulement selon la revendication n° 1, **caractérisée en ce que** des bords de l'orifice de prélèvement de fluide (6) sont munis d'un biseau ou d'un arrondi dont la normale au bord (8) inscrit avec la corde du profil (7) de la section d'aube de paroi un angle $\alpha$ compris entre 70° et 250°,

3. Machine à écoulement selon la revendication n° 1 ou n° 2, **caractérisée en ce qu'**au moins un bord de l'orifice de prélèvement de fluide (6) est muni d'un biseau de bord (4).

4. Machine à écoulement selon la revendication n° 1 ou n° 2, **caractérisée en ce qu'**au moins un bord de l'orifice de prélèvement de fluide (6) est muni d'un arrondi (5).

5. Machine à écoulement selon une des revendications n° 1 à n° 4, **caractérisée en ce qu'**une ligne médiane d'un canal de prélèvement (9) se raccordant à l'orifice de prélèvement de fluide (6) est inclinée au voisinage de l'orifice de prélèvement de fluide (6) suivant un angle $\beta$ par rapport à la normale à la direction méridienne m, si bien qu'il en résulte l'équation suivante :

$$15° < \beta < 75°.$$

6. Machine à écoulement selon une des revendications n° 1 à n° 5, **caractérisée en ce qu'**une ligne médiane d'un canal de prélèvement (9) se raccordant à l'orifice de prélèvement de fluide (6) est inclinée au voisinage de l'orifice de prélèvement de fluide (6) suivant un angle $\gamma$ par rapport à la normale à la direction de la normale de corde sn, si bien qu'il en résulte l'équation suivante :

$$15° < \gamma < 75°.$$

**Fig. 1:**    **Stand    der Technik**

EP 1 632 662 B1

Fig. 2

Fig. 3

EP 1 632 662 B1

Fig. 4a

**Fig. 4b**

EP 1 632 662 B1

# Fig. 4c

EP 1 632 662 B1

EP 1 632 662 B1

Fig. 5a

Fig. 5b

Fig. 5c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0049655 A
- GB 2388875 A
- US 2003033815 A1
- US 3846038 A
- EP 1329615 A